# EUROPÄISCHE PATENTSCHRIFT

(11) **EP 3 814 083 B1**
(45) Veröffentlichungstag und Bekanntmachung des Hinweises auf die Patenterteilung: **09.02.2022**
(21) Anmeldenummer: 19737478.8
(22) Anmeldetag: 26.06.2019
(51) Int. Cl.: B29B 11/16, B29C 31/00, B29C 31/08

(54) **VORFORMWERKZEUG ZUMINDEST ZU EINER HERSTELLUNG EINES VORFORMLINGS EINES VERBUNDBAUTEILS**
PREFORM TOOL AT LEAST FOR PRODUCING A PREFORM OF A COMPOSITE COMPONENT
OUTIL DE PRÉFORMAGE AU MOINS POUR LA FABRICATION D'UNE PRÉFORME D'UNE PIÈCE COMPOSITE

(30) Priorität: 26.06.2018 DE 102018115325
(43) Veröffentlichungstag der Anmeldung: 05.05.2021
(73) Patentinhaber: Schmidt & Heinzmann GmbH & Co. KG, 76646 Bruchsal (DE)
(72) Erfinder: FÜRST, Tobias, 76228 Karlsruhe (DE); MÄRTIENS, Steffen, 76646 Bruchsal (DE)
(74) Vertreter: Daub, Thomas
(86) Internationale Anmeldenummer: PCT/EP2019/066966
(87) Internationale Veröffentlichungsnummer: WO 2020/002408

(56) Entgegenhaltungen:
- WO-A1-94/20399
- US-A- 4 200 271

## Beschreibung

### Stand der Technik

Die Erfindung betrifft ein Vorformwerkzeug zumindest zu einer Herstellung eines Vorformlings eines Verbundbauteils nach dem Oberbegriff des Anspruchs 1.

Es ist bereits ein Vorformwerkzeug zumindest zu einer Herstellung eines Vorformlings, insbesondere einer Preform, eines Verbundbauteils aus Fasern oder Fasermatten, mit zumindest einem Werkzeuggrundkörper und mit zumindest einer Transport- und/oder Ablageeinheit, die zumindest zu einer Aufnahme des Vorformlings oder zu einer Aufnahme der Fasern oder Fasermatten vorgesehen ist, vorgeschlagen worden. Bei dem bereits bekannten Vorformwerkzeug verbleibt die Transport- und/oder Ablageeinheit, auf der der Vorformling oder auf der die Fasern oder die Fasermatten angeordnet ist/sind, während eines Heizprozess und während eines Kühlprozess an dem Vorformwerkzeug. Das bereits bekannte Vorformwerkzeug wird mittels variothermer Werkzeugtechnik aufgeheizt und abgekühlt, was hinsichtlich einer Thermobehandlung von Vorformlingen von Verbundbauteilen mit einem hohen energetischen Aufwand verbunden ist.

Des Weiteren sind aus DE 10 2010 052 597 A1 und US 5,204,033 A bereits Vorformwerkzeuge zumindest zu einer Herstellung eines Vorformlings eines Verbundbauteils aus Fasern oder Fasermatten bekannt, wobei die Vorformwerkzeuge zumindest einen Werkzeuggrundkörper und zumindest eine Transport- und/oder Ablageeinheit umfassen, die zumindest zu einer Aufnahme des Vorformlings oder zu einer Aufnahme der Fasern oder Fasermatten vorgesehen ist, wobei die zumindest eine Transport- und/oder Ablageeinheit zumindest zu einem Transport des Vorformlings oder zu einem Transport der Fasern oder Fasermatten abnehmbar am Werkzeuggrundkörper angeordnet ist.

Ferner ist aus WO 94/20399 A1 bereits ein Vorformwerkzeug zumindest zu einer Herstellung eines Vorformlings eines Verbundbauteils aus Fasern oder Fasermatten, mit zumindest einem Werkzeuggrundkörper und mit zumindest einer Transport- und/oder Ablageeinheit, die zumindest zu einer Aufnahme des Vorformlings oder zu einer Aufnahme der Fasern oder Fasermatten vorgesehen ist, bekannt.

Die Aufgabe der Erfindung besteht insbesondere darin, ein gattungsgemäßes Vorformwerkzeug mit einer hohen Flexibilität bereitzustellen, das insbesondere eine zumindest hinsichtlich einer Thermobehandlung von Vorformlingen von Verbundbauteilen energiearme Herstellung der Vorformlinge der Verbundbauteile ermöglicht. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Vorformwerkzeug, insbesondere von einem Preformwerkzeug, zumindest zu einer Herstellung eines Vorformlings, insbesondere einer Preform, eines Verbundbauteils, insbesondere einer Verbundwerkstoffblattfeder, aus Fasern oder Fasermatten, insbesondere aus Glasfasern oder Glasfasermatten, mit zumindest einem Werkzeuggrundkörper und mit zumindest einer Transport- und/oder Ablageeinheit, die zumindest zu einer Aufnahme des Vorformlings oder zu einer Aufnahme der Fasern oder Fasermatten vorgesehen ist, wobei die zumindest eine Transport- und/oder Ablageeinheit zumindest zu einem Transport des Vorformlings oder zu einem Transport der Fasern oder Fasermatten, insbesondere zur Durchführung eines Thermoprozesses des Vorformlings, abnehmbar am Werkzeuggrundkörper angeordnet ist.

Es wird vorgeschlagen, dass die Transport- und/oder Ablageeinheit Aufnahmestege aufweist, auf denen der Vorformling oder auf denen die Fasern oder die Fasermatten, aus denen der Vorformling erzeugbar ist, anordenbar ist/sind, wobei die Aufnahmestege in einem am Werkzeuggrundkörper angeordneten Zustand der Transport- und/oder Ablageeinheit in, insbesondere eine Aufnahmeausnehmung des Werkzeuggrundkörpers bildende, Nuten des Werkzeuggrundkörpers angeordnet sind.. Vorzugsweise ist die zumindest eine Transport- und/oder Ablageeinheit frei von einem Lösen zumindest eines an der Transport- und/oder Ablageeinheit oder am Werkzeuggrundkörper angeordneten Fixierelements abnehmbar am Werkzeuggrundkörper angeordnet. Vorzugsweise ist die zumindest eine Transport- und/oder Ablageeinheit sicherungselementlösungsfrei abnehmbar am Werkzeuggrundkörper angeordnet. Bevorzugt ist die Transport- und/oder Ablageeinheit frei von einer Thermoeinheit, insbesondere frei von Fluidführungskanälen, durch die ein Fluid zu einem Heizen oder Kühlen der Transport- und/oder Ablageeinheit führbar ist, ausgebildet. Die Transport- und/oder Ablageeinheit ist vorzugsweise aus einem wärmeleitfähigen Werkstoff ausgebildet, der eine Wärmeleitfähigkeit λ mit einem Wert von insbesondere mehr als 15 W/(m*K) und bevorzugt von mehr als 40 W/(m*K) aufweist. Vorzugsweise ist die Transport- und/oder Ablageeinheit aus einem Stahl gebildet. Es ist jedoch auch denkbar, dass die Transport- und/oder Ablageeinheit aus einem anderen, einem Fachmann als sinnvoll erscheinenden Werkstoff gebildet ist, wie beispielsweise aus Aluminium, aus Titan, aus einer Metalllegierung o. dgl. Vorzugsweise ist die Transport- und/oder Ablageeinheit dazu vorgesehen, während eines Herstellungsprozess eines Vorformlings, insbesondere unabhängig von dem Werkzeuggrundkörper, zusammen mit dem Vorformling oder zusammen mit den Fasern oder Fasermatten, insbesondere mittels einer Handhabungsvorrichtung, wie beispielsweise mittels eines Roboters o. dgl., zwischen einzelnen Fertigungsstationen einer Produktionsvorrichtung transportiert zu werden.

Das Vorformwerkzeug ist besonders bevorzugt zumindest zu einer Herstellung eines Vorformlings einer Glasfaserblattfeder aus Glasfasern oder Glasfasermatten vorgesehen. Es ist jedoch auch denkbar, dass das Vorformwerkzeug alternativ oder zusätzlich zu einer Herstellung eines Vorformlings einer Verbundwerkstoffblattfeder aus anderen, einem Fachmann als sinnvoll erscheinenden Fasern oder Fasermatten, wie beispielsweise aus Kohlenstofffasern oder Kohlenstofffasermatten, aus Polyamidfasern oder Polyamidfasermatten, aus einer Mischung der bereits genannten Fasern oder Fasermatten o. dgl., vorgesehen ist. Das Vorformwerkzeug ist besonders bevorzugt zumindest zu einer Herstellung eines Vorformlings mit einer maximalen Materialstärke von insbesondere mehr als 10 mm, bevorzugt von mehr als 20 mm, besonders bevorzugt von mehr als 50 mm und ganz besonders bevorzugt von weniger als 100 mm vorgesehen. Das Vorformwerkzeug ist besonders bevorzugt zumindest zu einer Herstellung eines dicken Vorformlings, insbesondere einer dicken Preform, eines Verbundbauteils, insbesondere einer Verbundwerkstoffblattfeder, vorgesehen. Vorzugsweise sind zu einer Herstellung des Vorformlings des Verbundbauteils mehrere Schichten an Fasern oder Fasermatten, insbesondere zumindest mehr als 5 Schichten, bevorzugt mehr als 10 Schichten, besonders bevorzugt mehr als 30 Schichten und ganz besonders bevorzugt mehr als 50 Schichten, aufeinander stapelbar, insbesondere auf die Transport- und/oder Ablageeinheit stapelbar. Der Vorformling des Verbundbauteils ist vorzugsweise eine Vorstufe zu einem, insbesondere mit Harz versehenen, konsolidierten Verbundbauteil. Der Vorformling des Verbundbauteils weist vorzugsweise Fasern oder Fasermatten auf, die insbesondere durch ein Aufschmelzen von einzelnen Fasern, auf eine, einem Fachmann bereits bekannte Art und Weise miteinander verbunden sind, wobei jedoch eine Harzimprägnierung oder Harzinjektion noch nicht erfolgt ist. Vorzugsweise ist der Vorformling des Verbundbauteils ein Bauteil, das frei von einem zu injizierenden Harz zur Herstellung eines Fertigbauteils ausgebildet ist.

Vorzugsweise liegt der Vorformling bzw. liegen die Fasern oder Fasermatten zumindest teilweise an den Aufnahmestegen an, insbesondere in einem an der Transport- und/oder Ablageeinheit angeordneten Zustand des Vorformlings bzw. der Fasern oder Fasermatten. Vorzugsweise liegt der Vorformling bzw. liegen die Fasern oder Fasermatten zumindest teilweise an den Aufnahmestegen und zumindest teilweise an der Aufnahmefläche des Werkzeuggrundkörpers an, insbesondere in einem an der Transport- und/oder Ablageeinheit angeordneten Zustand des Vorformlings bzw. der Fasern oder Fasermatten und in einem an dem Werkzeuggrundkörper angeordneten Zustand der Transport- und/oder Ablageeinheit. Bevorzugt sind zumindest die Aufnahmestege der Transport- und/oder Ablageeinheit in einem an dem Werkzeuggrundkörper angeordneten Zustand der Transport- und/oder Ablageeinheit von zumindest drei Seiten von dem Werkzeuggrundkörper zumindest teilweise, insbesondere vollständig, überdeckt bzw. umgeben, insbesondere in einem in den Nuten des Werkzeuggrundkörpers angeordneten Zustand der Aufnahmestege. Die Aufnahmestege weisen, insbesondere in einem am Werkzeuggrundkörper angeordneten Zustand, eine Längserstreckung auf, die zumindest im Wesentlichen parallel zur Horizontalebene und/oder zur Aufnahmeebene der Transport- und/oder Ablageeinheit verläuft. Bevorzugt erstrecken sich die Aufnahmestege der Transport- und/oder Ablageeinheit über eine gesamte Maximalerstreckung, insbesondere über eine gesamte Maximalbreite, der Transport- und/oder Ablageeinheit. Vorzugsweise erstrecken sich die Aufnahmestege der Transport- und/oder Ablageeinheit von einer Seite eines Rahmens der Transport- und/oder Ablageeinheit zu einer weiteren Seite des Rahmens der Transport- und/oder Ablageeinheit.

Mittels der erfindungsgemäßen Ausgestaltung kann vorteilhaft ein Vorformwerkzeug zumindest zu einer Herstellung eines Vorformlings eines Verbundbauteils mit einer hohen Flexibilität bereitgestellt werden, das besonders vorteilhaft eine zumindest hinsichtlich einer Thermobehandlung von Vorformlingen von Verbundbauteilen energiearme Herstellung der Vorformlinge der Verbundbauteile ermöglicht. Es kann vorteilhaft eine Puffermöglichkeit in einem Herstellungsprozess mittels der abnehmbar an dem Werkzeuggrundkörper angeordneten Transport- und/oder Ablageeinheit erreicht werden, so dass ein zuverlässiger und insbesondere prozesssicherer Herstellungsprozess realisiert werden kann. Es kann vorteilhaft ein Transport eines, insbesondere nach einem Heizprozess noch, weichen Vorformlings von dem, insbesondere mit einer Heizeinheit verbindbaren, Vorformwerkzeug zu einem weiteren, insbesondere mit einer Kühleinheit verbindbaren, Vorformwerkzeug ermöglicht werden, insbesondere zu einer Durchführung eines Kühlprozess in dem weiteren, insbesondere mit der Kühleinheit ausgebildeten, Vorformwerkzeug. Es kann vorteilhaft eine präzise Ausrichtung der Transport- und/oder Ablageeinheit an dem Werkzeuggrundkörper realisiert werden. Es kann vorteilhaft eine sichere Anlagefläche der Transport- und/oder Ablageeinheit zu einem Abheben des Vorformlings bzw. der Fasern oder Fasermatten von dem Werkzeuggrundkörper für einen Transport des Vorformlings bzw. der Fasern oder der Fasermatten realisiert werden.

Des Weiteren wird vorgeschlagen, dass die Transport- und/oder Ablageeinheit zumindest teilweise korrespondierend mit der Aufnahmeausnehmung des Werkzeuggrundkörpers ausgebildet ist, in der die Transport- und/oder Ablageeinheit zumindest abschnittsweise anordenbar ist. Bevorzugt ist die Transport- und/oder Ablageeinheit zumindest abschnittsweise zumindest im Wesentlichen passgenau in die Aufnahmeausnehmung des Werkzeuggrundkörpers einsetzbar, wobei insbesondere eine durch eine thermische Beeinflussung bedingte Toleranz vorhanden sein kann. Vorzugsweise ragt die Transport- und/oder Ablageeinheit, insbesondere in einem in der Aufnahmeausnehmung angeordneten Zustand der Transport- und/oder Ablageeinheit, zumindest teilweise über den Werkzeuggrundkörper hinaus, insbesondere betrachtet entlang einer zumindest im Wesentlichen parallel zu einer Horizontalebene des Werkzeuggrundkörpers und/oder zu einer Aufnahmeebene der Transport- und/oder Ablageeinheit verlaufenden Richtung. Vorzugsweise ragen zumindest Greiffortsätze der Transport- und/oder Ablageeinheit, die von einer Handhabungsvorrichtung, insbesondere einem Roboter, greifbar sind, über den Werkzeuggrundkörper hinaus. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Alternativ ist jedoch auch denkbar, dass die Transport- und/oder Ablageeinheit vollständig in der Aufnahmeausnehmung des Werkzeuggrundkörpers aufnehmbar ist. Vorzugsweise wird die Aufnahmeausnehmung des Werkzeuggrundkörpers aus einer Vielzahl von, insbesondere geradlinigen und/oder zumindest im Wesentlichen parallel verlaufenden, Nuten des Werkzeuggrundkörpers gebildet. Bevorzugt wird die Aufnahmeausnehmung des Werkzeuggrundkörpers aus einer Vielzahl von, insbesondere geradlinigen und/oder zumindest im Wesentlichen parallel verlaufenden, Längsnuten des Werkzeuggrundkörpers gebildet. Alternativ oder zusätzlich wird die Aufnahmeausnehmung des Werkzeuggrundkörpers aus einer Vielzahl von, insbesondere geradlinigen und/oder zumindest im Wesentlichen parallel verlaufenden, Quernuten des Werkzeuggrundkörpers gebildet. Es ist jedoch auch denkbar, dass die Aufnahmeausnehmung aus einer einzelnen Materialaussparung im Werkzeuggrundkörper oder aus mehreren einzelnen Materialaussparungen im Werkzeuggrundkörper, die verschieden von einer geradlinigen und/oder zumindest im Wesentlichen parallel verlaufenden Nut ausgebildet sind, gebildet wird. Vorzugsweise ist die Transport- und/oder Ablageeinheit formschlüssig mit dem Werkzeuggrundkörper verbunden, insbesondere infolge eines zumindest teilweisen Eingreifens oder einer Anordnung der Transport- und/oder Ablageeinheit, insbesondere von Aufnahmestegen der Transport- und/oder Ablageeinheit, in der Aufnahmeausnehmung, insbesondere in den Nuten, des Werkzeuggrundkörpers. Mittels der erfindungsgemäßen Ausgestaltung kann vorteilhaft eine zuverlässige Anordnung der Transport- und/oder Ablageeinheit an dem Werkzeuggrundkörper realisiert werden. Es kann vorteilhaft eine präzise Ausrichtung der Transport- und/oder Ablageeinheit an dem Werkzeuggrundkörper realisiert werden. Es kann vorteilhaft eine sichere Verbindung zwischen der Transport- und/oder Ablageeinheit und dem Werkzeuggrundkörper realisiert werden, insbesondere um eine hohe Prozesssicherheit zu ermöglichen.

Ferner wird vorgeschlagen, dass die Transport- und/oder Ablageeinheit zumindest eine Aufnahmeebene zu einer Aufnahme des Vorformlings oder zu einer Aufnahme der Fasern oder der Fasermatten, aus denen der Vorformling erzeugbar ist, aufweist, die in einem am Werkzeuggrundkörper angeordneten Zustand der Transport- und/oder Ablageeinheit zumindest im Wesentlichen bündig mit zumindest einer Aufnahmefläche des Werkzeuggrundkörpers abschließt. Vorzugsweise wird die Aufnahmeebene der Transport- und/oder Ablageeinheit durch eine zusammenhängende Aufnahmefläche der Transport- und/oder Ablageeinheit oder durch Teilaufnahmeflächen, insbesondere von einzelnen Aufnahmestegen, der Transport- und/oder Ablageeinheit definiert bzw. gebildet. Unter "im Wesentlichen bündig" soll insbesondere eine Anordnung von zumindest zwei Elementen relativ zueinander verstanden werden, wobei die zwei Elemente, insbesondere entlang einer zumindest im Wesentlichen senkrecht zur Horizontalebene und/oder zur Aufnahmeebene der Transport- und/oder Ablageeinheit verlaufenden Richtung, einen maximalen Versatz, insbesondere einen maximalen Abstand zweier zumindest im Wesentlichen parallelen Flächen der Elemente, von insbesondere weniger als 20 mm, bevorzugt weniger als 10 mm und besonders bevorzugt von weniger als 5 mm aufweisen. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise begrenzt die Aufnahmefläche des Werkzeuggrundkörpers die Aufnahmeausnehmung des Werkzeuggrundkörpers, insbesondere die die Aufnahmeausnehmung des Werkzeuggrundkörpers bildenden Nuten des Werkzeuggrundkörpers. Vorzugsweise setzt sich die Aufnahmefläche des Werkzeuggrundkörpers durch eine Vielzahl von Teilflächen des Werkzeuggrundkörpers zusammen, die zumindest durch die die Aufnahmeausnehmung des Werkzeuggrundkörpers bildenden Nuten des Werkzeuggrundkörpers getrennt sind. Vorzugsweise liegt der Vorformling bzw. die Fasern oder die Fasermatten in einem am Werkzeuggrundkörper angeordneten Zustand der Transport- und/oder Ablageeinheit teilweise an der Transport- und/oder Ablageeinheit, insbesondere an den Aufnahmestegen der Transport- und/oder Ablageeinheit, und an dem Werkzeuggrundkörper, insbesondere an der Aufnahmefläche des Werkzeuggrundkörpers, an. Es ist jedoch auch denkbar, dass der Vorformling bzw. die Fasern oder die Fasermatten in einem am Werkzeuggrundkörper angeordneten Zustand der Transport- und/oder Ablageeinheit lediglich, insbesondere ausschließlich, an der Transport- und/oder Ablageeinheit, insbesondere an den Aufnahmestegen der Transport- und/oder Ablageeinheit, anliegt. Weitere, einem Fachmann als sinnvoll erscheinende Ausgestaltungen sind ebenfalls denkbar. Mittels der erfindungsgemäßen Ausgestaltung kann vorteilhaft eine präzise Ausrichtung der Transport- und/oder Ablageeinheit an dem Werkzeuggrundkörper realisiert werden. Es kann vorteilhaft eine sichere Verbindung zwischen der Transport- und/oder Ablageeinheit und dem Werkzeuggrundkörper realisiert werden, insbesondere um ein hohe Prozesssicherheit zu ermöglichen. Es kann vorteilhaft eine großflächige Anlagefläche bei einer gleichzeitigen Abnehmbarkeit der Transport- und/oder Ablageeinheit für den Vorformling bzw. für die Fasern oder die Fasermatten realisiert werden.

Des Weiteren wird vorgeschlagen, dass die Transport- und/oder Ablageeinheit, insbesondere die, Aufnahmestege aufweist, auf denen der Vorformling oder auf denen die Fasern oder die Fasermatten, aus denen der Vorformling erzeugbar ist, anordenbar ist/sind, wobei zumindest zwei benachbarte Aufnahmestege in unterschiedlichen Höhen angeordnet sind. Vorzugsweise weisen die zumindest benachbarten Aufnahmestege, insbesondere betrachtet entlang einer zumindest im Wesentlichen senkrecht zur Aufnahmeebene der Transport- und/oder Ablageeinheit und/oder zur Horizontalebene verlaufenden Richtung, unterschiedliche maximale Abstände zu einer Ober- oder Unterseite des Rahmens der Transport- und/oder Ablageeinheit auf. Vorzugsweise bildet eine die zumindest zwei benachbarten, insbesondere alle, Aufnahmestege in zumindest einem Punkt schneidende Linie eine Kurve, insbesondere einen Bogen. Vorzugsweise verläuft die die zumindest zwei benachbarten, insbesondere alle, Aufnahmestege in zumindest einem Punkt schneidende Linie in der oder zumindest im Wesentlichen parallel zu der Aufnahmeebene der Transport- und/oder Ablageeinheit. Mittels der erfindungsgemäßen Ausgestaltung kann vorteilhaft eine sichere Anlagefläche der Transport- und/oder Ablageeinheit zu einem Abheben des Vorformlings bzw. der Fasern oder Fasermatten von dem Werkzeuggrundkörper für einen Transport des Vorformlings bzw. der Fasern oder der Fasermatten realisiert werden, wobei die Aufnahmestege vorteilhaft bereits eine leichte Krümmung des Vorformlings zu einer Herstellung einer Verbundwerkstoffblattfeder vorgibt.

Ferner wird vorgeschlagen, dass die Transport- und/oder Ablageeinheit zumindest eine, insbesondere an Aufnahmestegen der Transport- und/oder Ablageeinheit angeordnete, Schnittwerkzeugdurchführungsnut aufweist, in die sich ein Schnittwerkzeug während eines Schnitts durch den auf der Transport- und/oder Ablageeinheit angeordneten Vorformling hineinerstrecken kann. Bevorzugt erstreckt sich die Schnittwerkzeugdurchführungsnut quer, insbesondere zumindest im Wesentlichen senkrecht, zur Längserstreckung der Aufnahmestege. Vorteilhafterweise weist die Aufnahmefläche des Werkzeuggrundkörpers zumindest eine Schnittwerkzeugdurchführungsnut auf. Insbesondere ist die Schnittwerkzeugdurchführungsnut des Werkzeuggrundkörpers in einem an dem Werkzeuggrundkörper angeordneten Zustand der Transport- und/oder Ablageeinheit fluchtend zu der Schnittwerkzeugdurchführungsnut der Transport- und/oder Ablageeinheit ausgerichtet. Vorzugsweise sind mehrere Schnittwerkzeugdurchführungsnuten an einem einzelnen Aufnahmesteg der Transport- und/oder Ablageeinheit angeordnet. Bevorzugt sind die mehreren an einem einzelnen Aufnahmesteg der Transport- und/oder Ablageeinheit angeordneten Schnittwerkzeugdurchführungsnuten entlang der Längserstreckung des Aufnahmestegs relativ zueinander beabstandet angeordnet. Insbesondere umfasst der Werkzeuggrundkörper mehrere Schnittwerkzeugdurchführungsnuten, die in einem an dem Werkzeuggrundkörper angeordneten Zustand der Transport- und/oder Ablageeinheit fluchtend zu den Schnittwerkzeugdurchführungsnuten der Transport- und/oder Ablageeinheit ausgerichtet sind. Mittels der erfindungsgemäßen Ausgestaltung kann vorteilhaft sichergestellt werden, dass zusätzlich zu einer Entnahmefunktion der Transport- und/oder Ablageeinheit eine Bearbeitung des an der Transport- und/oder Ablageeinheit angeordneten Vorformlings bzw. der an der Transport- und/oder Ablageeinheit angeorndeten Fasern oder Fasermatten realisiert werden kann.

Zudem wird vorgeschlagen, dass die Transport- und/oder Ablageeinheit zumindest eine, insbesondere die, Aufnahmeebene zu einer Aufnahme des Vorformlings oder zu einer Aufnahme von Fasern oder Fasermatten, aus denen der Vorformling erzeugbar ist, aufweist, die gekrümmt ausgebildet ist. Vorzugsweise ist die Aufnahmefläche des Werkzeuggrundkörpers gekrümmt ausgebildet, insbesondere korrespondierend mit der Aufnahmeebene der Transport- und/oder Ablageeinheit. Mittels der erfindungsgemäßen Ausgestaltung kann vorteilhaft eine sichere Anlagefläche der Transport- und/oder Ablageeinheit zu einem Abheben des Vorformlings bzw. der Fasern oder Fasermatten von dem Werkzeuggrundkörper für einen Transport des Vorformlings bzw. der Fasern oder der Fasermatten realisiert werden, wobei die Aufnahmestege vorteilhaft bereits eine leichte Krümmung des Vorformlings zu einer Herstellung einer Verbundwerkstoffblattfeder vorgibt.

Des Weiteren wird vorgeschlagen, dass die Transport- und/oder Ablageeinheit als Transportkorb oder als Transportgitter ausgebildet ist. Mittels der erfindungsgemäßen Ausgestaltung kann vorteilhaft ein Vorformwerkzeug zumindest zu einer Herstellung eines Vorformlings eines Verbundbauteils mit einer hohen Flexibilität bereitgestellt werden, das besonders vorteilhaft kompakt und leicht ausgestaltet ist.

Ferner wird eine Produktionsvorrichtung zumindest zu einer Herstellung eines Vorformlings, insbesondere einer Preform, eines Verbundbauteils, insbesondere einer Verbundwerkstoffblattfeder, mit zumindest einem erfindungsgemäßen Vorformwerkzeug vorgeschlagen. Mittels der erfindungsgemäßen Ausgestaltung kann vorteilhaft eine Produktionsvorrichtung zumindest zu einer Herstellung eines Vorformlings eines Verbundbauteils mit einer hohen Flexibilität bereitgestellt werden, die besonders vorteilhaft eine zumindest hinsichtlich einer Thermobehandlung von Vorformlingen von Verbundbauteilen energiearme Herstellung der Vorformlinge der Verbundbauteile ermöglicht. Es kann vorteilhaft eine Puffermöglichkeit in einem Herstellungsprozess mittels der abnehmbar an dem Werkzeuggrundkörper angeordneten Transport- und/oder Ablageeinheit erreicht werden, so dass ein zuverlässiger und insbesondere prozesssicherer Herstellungsprozess realisiert werden kann. Es kann vorteilhaft ein Transport eines, insbesondere nach einem Heizprozess noch, weichen Vorformlings von dem, insbesondere mit einer Heizeinheit ausgebildeten, Vorformwerkzeug zu einem weiteren, insbesondere mit einer Kühleinheit ausgebildeten, Vorformwerkzeug ermöglicht werden, insbesondere zu einer Durchführung eines Kühlprozess in dem weiteren, insbesondere mit der Kühleinheit ausgebildeten, Vorformwerkzeug.

Zudem geht die Erfindung aus von einem Verfahren zur Herstellung eines Vorformlings, insbesondere einer Preform, eines Verbundbauteils, insbesondere einer Verbundwerkstoffblattfeder, insbesondere unter Verwendung eines erfindungsgemäßen Vorformwerkzeugs. Es wird vorgeschlagen, dass in zumindest einem Verfahrensschritt der Vorformling des Verbundbauteils zu einer Thermobehandlung, insbesondere zu einer Abkühlung, von zumindest einem, insbesondere mit einer Heizeinheit ausgebildeten, Vorformwerkzeug an zumindest ein weiteres, insbesondere mit einer Kühleinheit ausgebildeten, Vorformwerkzeug übergeben wird, insbesondere unter Verwendung einer Transport- und/oder Ablageeinheit des Vorformwerkzeugs. Mittels der erfindungsgemäßen Ausgestaltung kann vorteilhaft ein Verfahren zumindest zu einer Herstellung eines Vorformlings eines Verbundbauteils mit einer hohen Flexibilität bereitgestellt werden, das besonders vorteilhaft eine zumindest hinsichtlich einer Thermobehandlung von Vorformlingen von Verbundbauteilen energiearme Herstellung der Vorformlinge der Verbundbauteile ermöglicht. Es kann vorteilhaft eine Puffermöglichkeit in einem Herstellungsprozess mittels der abnehmbar an dem Werkzeuggrundkörper angeordneten Transport- und/oder Ablageeinheit erreicht werden, so dass ein zuverlässiger und insbesondere prozesssicherer Herstellungsprozess realisiert werden kann. Es kann vorteilhaft ein Transport eines, insbesondere nach einem Heizprozess noch, weichen Vorformlings von dem, insbesondere mit einer Heizeinheit ausgebildeten, Vorformwerkzeug zu einem weiteren, insbesondere mit einer Kühleinheit ausgebildeten, Vorformwerkzeug ermöglicht werden, insbesondere zu einer Durchführung eines Kühlprozess in dem weiteren, insbesondere mit der Kühleinheit ausgebildeten, Vorformwerkzeug.

Das erfindungsgemäße Vorformwerkzeug, die erfindungsgemäße Produktionsvorrichtung und/oder das erfindungsgemäße Verfahren sollen/soll hierbei nicht auf die oben beschriebene Anwendung und Ausführungsform beschränkt sein. Insbesondere können/kann das erfindungsgemäße Vorformwerkzeug, die erfindungsgemäße Produktionsvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Produktionsvorrichtung zumindest zu einer Herstellung eines Vorformlings eines Verbundbauteils in einer schematischen Darstellung,
- Fig. 2: eine Kühl- und Schneidstation der erfindungsgemäßen Produktionsvorrichtung in einer schematischen Darstellung,
- Fig. 3: ein erfindungsgemäßes Vorformwerkzeug der erfindungsgemäßen Produktionsvorrichtung in einer schematischen Darstellung,
- Fig. 4: eine Transport- und/oder Ablageeinheit des erfindungsgemäßen Vorformwerkzeugs in einer schematischen Darstellung und
- Fig. 5: ein Ablauf eines erfindungsgemäßen Verfahrens zumindest zu einer Herstellung eines Vorformlings eines Verbundbauteils in einer schematischen Darstellung.

### Beschreibung des Ausführungsbeispiels

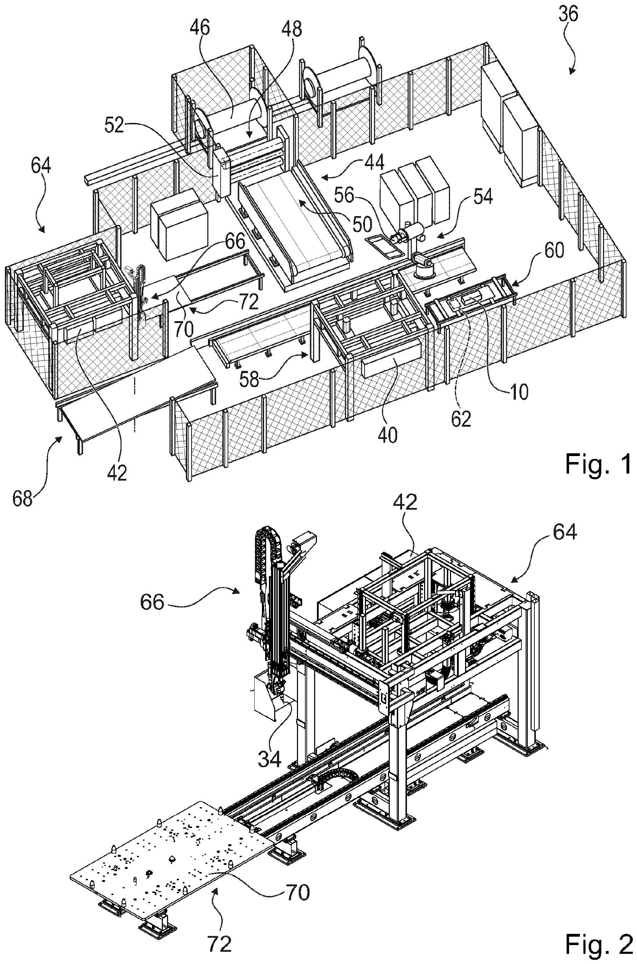

Fig. 1 zeigt eine Produktionsvorrichtung 36 zumindest zu einer Herstellung eines Vorformlings, insbesondere einer Preform, eines Verbundbauteils, insbesondere einer Verbundwerkstoffblattfeder aus Fasern oder Fasermatten. Die Produktionsvorrichtung 36 ist bevorzugt zu einer Herstellung einer Preform einer Glasfaserblattfeder aus Glasfasern oder Glasfasermatten vorgesehen. Die Produktionsvorrichtung 36 umfasst vorzugsweise zumindest eine Zuschnittstation 44 zu einem Zuschnitt von Fasern oder Fasermatten. Die Zuschnittstation 44 ist vorzugsweise zu einem Zuschnitt von auf Coils 46 gewickelten Faserbahnen zu Fasermatten vorgesehen. Es ist jedoch auch denkbar, dass die Zuschnittstation 44 zu einem Schneiden von einzelnen Fasern vorgesehen ist. Die Faserbahnen sind bevorzugt aus einer Fasermischung aus Glasfasern und Polypropylenfasern, aus Glasfasern und Polyamidfasern oder aus anderen, einem Fachmann als sinnvoll erscheinenden Fasern oder Fasermischungen gebildet. Die Zuschnittstation 44 umfasst vorzugsweise zumindest eine Schneideinheit 48, insbesondere eine Ultraschallschneideinheit, die dazu vorgesehen ist, die Faserbahnen in einzelne, insbesondere polygonale, Fasermatten zu schneiden.

Die Zuschnittstation 44 umfasst insbesondere zumindest eine Transporteinheit 50 zu einem Transport der geschnittenen Fasermatten. Vorzugsweise umfasst die Zuschnittstation 44 zumindest eine, insbesondere optische, Überwachungseinheit 52, wie beispielsweise eine Kamer o. dgl., zu einer Überwachung eines Vorhandenseins von Fehlstellen in den geschnittenen Fasermatten oder den ungeschnittenen Faserbahnen.

Die Produktionsvorrichtung 36 umfasst insbesondere zumindest eine Handhabungsvorrichtung 54, insbesondere einen Mehrachsroboter, die zumindest dazu vorgesehen ist, die geschnittenen Fasermatten handzuhaben, insbesondere zu stapeln. Die Handhabungsvorrichtung 54 umfasst vorzugsweise zumindest eine Greifereinheit 56, mittels derer die Fasermatten von der Transporteinheit 50 greifbar sind. Die Greifereinheit 56 kann als Nadelgreifereinheit, als Vakuumeinheit oder als eine andere, einem Fachmann zu einem Handhaben der Fasermatten ausgebildet sein. Die Handhabungsvorrichtung 54 ist zumindest dazu vorgesehen, die geschnittenen Fasermatten von der Transporteinheit 50 der Zuschnittstation 44 zu einer Heizstation 58 der Produktionsvorrichtung 36 oder zu einer Prüf- und/oder Pufferstation 60 der Produktionsvorrichtung 36 zu transportieren. Vorzugsweise ist bei der Heizstation 58 oder bei der Prüf- und/oder Pufferstation 60 zumindest ein, insbesondere Werkzeuggrundkörper 12 eines Vorformwerkzeugs 10, insbesondere zumindest ein Werkzeuggrundkörper 12 eines Vorformwerkzeugs 10, der Produktionsvorrichtung 36 und/oder zumindest eine Transport- und/oder Ablageeinheit 14 der Produktionsvorrichtung 36 angeordnet, das/die zu einer Aufnahme der Fasermatten vorgesehen ist. Die Handhabungsvorrichtung 54 ist vorzugsweise dazu vorgesehen, die geschnittenen Fasermatten in mehreren Schichten auf dem Vorformwerkzeug 10 und/oder auf der Transport- und/oder Ablageeinheit 14 zu stapeln. Vorzugsweise ist die Handhabungsvorrichtung 54 dazu vorgesehen, insbesondere mehr als zehn Fasermatten auf dem Vorformwerkzeug 10 und/oder auf der Transport- und/oder Ablageeinheit 14 zu stapeln, insbesondere bevor das Vorformwerkzeug 10 und/oder die Transport- und/oder Ablageeinheit 14 in die Heizstation 58 zu einem Heizprozess eingebracht wird. Die Heizstation 58 oder die Prüf- und/oder Pufferstation 60 umfasst zumindest eine Überwachungseinheit 62, die dazu vorgesehen ist, ein Gesamtgewicht der gestapelten Fasermatten, eine Anzahl an bereits gestapelten Fasermatten oder andere Kriterien zu prüfen.

Die Heizstation 58 umfasst vorzugsweise zumindest eine Heizeinheit 40 zu einem Aufheizen des Vorformwerkzeugs 10. Bevorzugt ist ein Oberwerkzeug (hier nicht näher dargestellt) der Produktionsvorrichtung 36 auf eine, einem Fachmann bereits bekannte Art und Weise an einem beweglichen Rahmen der Heizstation 58 angeordnet. Das Oberwerkzeug ist vorzugsweise fluidtechnisch mit einer Heizleitung (hier nicht näher dargestellt) der Heizeinheit 40 auf eine, einem Fachmann bereits bekannte Art und Weise verbunden. Es ist jedoch auch denkbar, dass die Heizeinheit 40 als kontaktlose Heizeinheit 40, wie beispielsweise als Infrarotheizeinheit, als Induktionsheizeinheit o. dgl. ausgebildet ist, die zumindest dazu vorgesehen ist, das Oberwerkzeug aufzuheizen. Das Vorformwerkzeug 10 mit der daran angeordneten Transport- und/oder Ablageeinheit 14 und den darauf gestapelten Fasermatten ist der Heizstation 58 derart zuführbar, dass das Oberwerkzeug mit dem Vorformwerkzeug 10 in Verbindung bringbar ist, insbesondere auf das Vorformwerkzeug 10 aufsetzbar ist, um die gestapelten Fasermatten zu heizen. Vorzugsweise sind mittels des Heizprozess in der Heizstation 58 Bindefasern der Fasermatten aktivierbar, insbesondere aufschmelzbar, so dass auf eine, einem Fachmann bereits bekannte Art und Weise ein Verbund der einzelnen Fasermatten erzeugbar ist.

Die Handhabungsvorrichtung 54 ist vorzugsweise dazu vorgesehen, insbesondere nach einem Heizprozess, zumindest die Transport- und/oder Ablageeinheit 14, insbesondere zusammen mit dem, insbesondere noch heißen, Verbund der einzelnen Fasermatten, einer Vorformzuschnittstation 64 der Produktionsvorrichtung 36 zuzuführen. Die Greifereinheit 56 der Handhabungsvorrichtung 54 ist vorzugsweise als Kombigreifereinheit ausgebildet, die dazu vorgesehen ist, Fasermatten zu greifen und in einer weiteren Greifaktion die Transport- und/oder Ablageeinheit 14 zu greifen. Vorzugsweise weist die Greifereinheit 56 auf einer Seite Greifelemente zu einem Greifen der Fasermatten auf und auf einer weiteren Seite weist die Greifereinheit 56 weitere Greiferelemente zu einem Greifen der Transport- und/oder Ablageeinheit 14 auf. Bevorzugt ist an der Vorformzuschnittstation 64 zumindest ein weiteres Vorformwerkzeug (hier nicht näher dargestellt) der Produktionsvorrichtung 36, insbesondere zumindest ein Werkzeuggrundkörper des weiteren Vorformwerkzeugs, vorgesehen. Das weitere Vorformwerkzeug und das Vorformwerkzeug 10 weisen eine zumindest im Wesentlichen analoge Ausgestaltung auf, so dass eine Beschreibung des Vorformwerkzeugs 10 auch auf das weitere Vorformwerkzeug zu lesen ist. Die Transport- und/oder Ablageeinheit 14 wird, insbesondere zusammen mit dem, insbesondere noch heißen, Verbund der einzelnen Fasermatten mittels der Handhabungsvorrichtung 54 an dem weiteren Vorformwerkzeug, insbesondere an dem Werkzeuggrundkörper des weiteren Vorformwerkzeugs angeordnet. Die Vorformzuschnittstation 64 umfasst vorzugsweise zumindest eine Kühleinheit 42 zu einem Kühlen der Transport- und/oder Ablageeinheit 14 und dem, insbesondere noch heißen, Verbund der einzelnen Fasermatten. Bevorzugt ist ein weiteres Oberwerkzeug (hier nicht näher dargestellt) der Produktionsvorrichtung 36 auf eine, einem Fachmann bereits bekannte Art und Weise an einem beweglichen Rahmen der Vorformzuschnittstation 64 angeordnet. Das weitere Oberwerkzeug ist vorzugsweise fluidtechnisch mit einer Kühlleitung (hier nicht näher dargestellt) der Kühleinheit 42 auf eine, einem Fachmann bereits bekannte Art und Weise verbunden. Das weitere Vorformwerkzeug mit der daran angeordneten Transport- und/oder Ablageeinheit 14 und den darauf gestapelten Fasermatten ist der Vorformzuschnittstation 64 derart zuführbar, dass das Oberwerkzeug mit dem weiteren Vorformwerkzeug in Verbindung bringbar ist, insbesondere auf das weitere Vorformwerkzeug aufsetzbar ist, um den Verbund an Fasermatten zu kühlen, insbesondere auf eine Temperatur von weniger als 100 °C.

Vorzugsweise umfasst die Vorformzuschnittstation 64 zumindest eine Schneideinheit 66, insbesondere ein Ultraschallschneideinheit, zu einem Zuschnitt des, insbesondere gekühlten, Verbunds an Fasermatten, um einzelne Vorformlinge für Verbundbauteile herzustellen (vgl. Figur 2). Die Schneideinheit 66 der Vorformzuschnittstation 64 umfasst vorzugsweise ein, insbesondere entlang und/oder um mehrere Achsen, beweglich gelagertes Schnittwerkzeug 34. Das Schnittwerkzeug 34 ist dazu vorgesehen, den, insbesondere gekühlten, Verbund an Fasermatten in einzelne Vorformlinge zu schneiden. Das Schnittwerkzeug 34 ist bevorzugt als Ultraschallklinge ausgebildet. Vorzugsweise ist das Schnittwerkzeug 34 mit einer Schnittgeschwindigkeit von insbesondere mehr als 10 mm/s, bevorzugt mehr als 100 mm/s und besonders bevorzugt mehr als 200 mm/s durch den, insbesondere gekühlten, Verbund an Fasermatten bewegbar, um den, insbesondere gekühlten, Verbund an Fasermatten in einzelne Vorformlinge zu schneiden.

Die Handhabungsvorrichtung 54 ist vorzugsweise dazu vorgesehen, insbesondere nach einem Kühl- und Schneidprozess, zumindest die Transport- und/oder Ablageeinheit 14, insbesondere zusammen mit den einzelnen Vorformlingen, einer Übergabe- und/oder Pufferstation 68 der Produktionsvorrichtung 36 zuzuführen. Die Übergabe- und/oder Pufferstation 68 ist vorzugweise als Drehtisch ausgebildet. Die Transport- und/oder Ablageeinheit 14 wird insbesondere nach einer Entnahme der einzelnen Vorformlinge an der Übergabe- und/oder Pufferstation 68 mittels der Handhabungsvorrichtung 54 beispielsweise wieder der Zuschnittstation 44 oder der Prüf- und/oder Pufferstation 60 zugeführt, um vorzugsweise erneut zu einer Aufnahme von Fasermatten im Prozessumlauf genutzt zu werden.

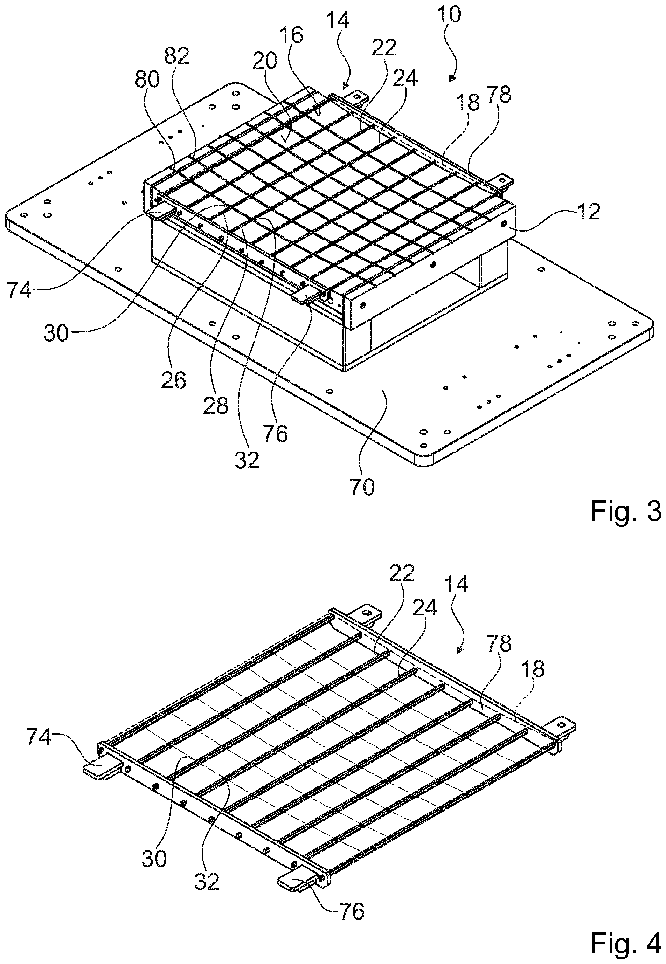

Figur 3 zeigt das Vorformwerkzeug 10 der Produktionsvorrichtung 36 zumindest zu einer Herstellung eines Vorformlings, insbesondere einer Preform, eines Verbundbauteils, insbesondere einer Verbundwerkstoffblattfeder, wobei das Vorformwerkzeug 10, insbesondere der Werkzeuggrundkörper 12, auf einer Transportplatte 70 einer Transporteinheit 72 der Vorformzuschnittstation 64, mittels der das Vorformwerkzeug 10 zumindest zu einem Kühlprozess zu dem weiteren Oberwerkzeug der Vorformzuschnittstation 64 bewegbar ist. Das Vorformwerkzeug 10 zumindest zu einer Herstellung eines Vorformlings, insbesondere einer Preform, eines Verbundbauteils, insbesondere einer Verbundwerkstoffblattfeder, aus Fasern oder Fasermatten, insbesondere aus Glasfasern oder Glasfasermatten, umfasst zumindest den Werkzeuggrundkörper 12 und zumindest die Transport- und/oder Ablageeinheit 14, die zumindest zu einer Aufnahme des Vorformlings oder zu einer Aufnahme der Fasern oder Fasermatten vorgesehen ist. Die zumindest eine Transport- und/oder Ablageeinheit 14 zumindest zu einem Transport des Vorformlings oder zu einem Transport der Fasern oder Fasermatten, insbesondere zur Durchführung einer Thermobehandlung des Vorformlings, ist abnehmbar am Werkzeuggrundkörper 12 angeordnet, insbesondere zu einer Ermöglichung eines Transports der Transport- und/oder Ablageeinheit 14, insbesondere zusammen mit dem/den an der Transport- und/oder Ablageeinheit 14 angeordneten Vorformling oder Fasermatten, unabhängig von dem Werkzeuggrundkörper 12. Die Transport- und/oder Ablageeinheit 14 ist zumindest teilweise korrespondierend mit einer Aufnahmeausnehmung 16 des Werkzeuggrundkörpers 12 ausgebildet, in der die Transport- und/oder Ablageeinheit 14 zumindest abschnittsweise anordenbar ist. Bevorzugt ist die Transport- und/oder Ablageeinheit 14 zumindest abschnittsweise zumindest im Wesentlichen passgenau in die Aufnahmeausnehmung 16 des Werkzeuggrundkörpers 12 einsetzbar, wobei insbesondere eine durch eine thermische Beeinflussung bedingte Toleranz vorhanden sein kann. Vorzugsweise ragt die Transport- und/oder Ablageeinheit 14, insbesondere in einem in der Aufnahmeausnehmung 16 angeordneten Zustand der Transport- und/oder Ablageeinheit 14, zumindest teilweise über den Werkzeuggrundkörper 12 hinaus, insbesondere betrachtet entlang einer zumindest im Wesentlichen parallel zu einer Horizontalebene des Werkzeuggrundkörpers 12 und/oder zu einer Aufnahmeebene 18 der Transport- und/oder Ablageeinheit 14 verlaufenden Richtung. Vorzugsweise ragen zumindest Greiffortsätze 74, 76 der Transport- und/oder Ablageeinheit 14, die von der Handhabungsvorrichtung 54, insbesondere der Greifereinheit 56, greifbar sind, über den Werkzeuggrundkörper 12 hinaus.

Die Transport- und/oder Ablageeinheit 14 umfasst zumindest die Aufnahmeebene 18 zu einer Aufnahme des Vorformlings oder zu einer Aufnahme der Fasern oder der Fasermatten, aus denen der Vorformling erzeugbar ist, die in einem am Werkzeuggrundkörper 12 angeordneten Zustand der Transport- und/oder Ablageeinheit 14 zumindest im Wesentlichen bündig mit zumindest einer Aufnahmefläche 20 des Werkzeuggrundkörpers 12 abschließt. Vorzugsweise wird die Aufnahmeebene 18 der Transport- und/oder Ablageeinheit 14 durch Teilaufnahmeflächen, insbesondere von einzelnen Aufnahmestegen 22, 24, der Transport- und/oder Ablageeinheit 14 definiert bzw. gebildet. Vorzugsweise begrenzt die Aufnahmefläche 20 des Werkzeuggrundkörpers 12 die Aufnahmeausnehmung 16 des Werkzeuggrundkörpers 12, insbesondere die Aufnahmeausnehmung 16 des Werkzeuggrundkörpers 12 bildende Nuten 26, 28 des Werkzeuggrundkörpers 12. Vorzugsweise setzt sich die Aufnahmefläche 20 des Werkzeuggrundkörpers 12 durch eine Vielzahl von Teilflächen des Werkzeuggrundkörpers 12 zusammen, die zumindest durch die die Aufnahmeausnehmung 16 des Werkzeuggrundkörpers 12 bildenden Nuten 26, 28 des Werkzeuggrundkörpers 12 getrennt sind. Vorzugsweise liegt der Vorformling bzw. die Fasern oder die Fasermatten in einem am Werkzeuggrundkörper 12 angeordneten Zustand der Transport- und/oder Ablageeinheit 14 teilweise an der Transport- und/oder Ablageeinheit 14, insbesondere an den Aufnahmestegen 22, 24 der Transport- und/oder Ablageeinheit 14, und an dem Werkzeuggrundkörper 12, insbesondere an der Aufnahmefläche 20 des Werkzeuggrundkörpers 12, an.

Die Transport- und/oder Ablageeinheit 14 umfasst die Aufnahmestege 22, 24, auf denen der Vorformling oder auf denen die Fasern oder die Fasermatten, aus denen der Vorformling erzeugbar ist, anordenbar ist/sind, wobei die Aufnahmestege 22, 24 in einem am Werkzeuggrundkörper 12 angeordneten Zustand der Transport- und/oder Ablageeinheit 14 in die, insbesondere die Aufnahmeausnehmung 16 des Werkzeuggrundkörpers 12 bildenden, Nuten 26, 28 des Werkzeuggrundkörpers 12 angeordnet sind. Bevorzugt sind zumindest die Aufnahmestege 22, 24 der Transport- und/oder Ablageeinheit 14 in einem an dem Werkzeuggrundkörper 12 angeordneten Zustand der Transport- und/oder Ablageeinheit 14 von zumindest drei Seiten von dem Werkzeuggrundkörper 12 zumindest teilweise, insbesondere vollständig, überdeckt bzw. umgeben, insbesondere in einem in den Nuten 26, 28 des Werkzeuggrundkörpers 12 angeordneten Zustand der Aufnahmestege 22, 24. Die Aufnahmestege 22, 24 weisen, insbesondere in einem am Werkzeuggrundkörper 12 angeordneten Zustand, eine Längserstreckung auf, die zumindest im Wesentlichen parallel zur Horizontalebene und/oder zur Aufnahmeebene 18 der Transport- und/oder Ablageeinheit 14 verläuft. Bevorzugt erstrecken sich die Aufnahmestege 22, 24 der Transport- und/oder Ablageeinheit 14 über eine gesamte Maximalerstreckung, insbesondere über eine gesamte Maximalbreite, der Transport- und/oder Ablageeinheit 14.

Figur 4 zeigt die Transport- und/oder Ablageeinheit 14 des Vorformwerkzeugs 10 in einem vom Werkzeuggrundkörper 12 abgenommenen Zustand der Transport- und/oder Ablageeinheit 14. Die Transport- und/oder Ablageeinheit 14 weist die Aufnahmestege 22, 24 auf, auf denen der Vorformling oder auf denen die Fasern oder die Fasermatten, aus denen der Vorformling erzeugbar ist, anordenbar ist/sind, wobei zumindest zwei benachbarte Aufnahmestege 22, 24 in unterschiedlichen Höhen angeordnet sind. Vorzugsweise weisen die zumindest zwei benachbarten Aufnahmestege 22, 24, insbesondere betrachtet entlang einer zumindest im Wesentlichen senkrecht zur Aufnahmeebene 18 der Transport- und/oder Ablageeinheit 14 und/oder zur Horizontalebene verlaufenden Richtung, unterschiedliche maximale Abstände zu einer Ober- oder Unterseite eines Rahmens 78 der Transport- und/oder Ablageeinheit 14 auf. Vorzugsweise bildet eine die zumindest zwei benachbarten, insbesondere alle, Aufnahmestege 22, 24 in zumindest einem Punkt schneidende Linie eine Kurve, insbesondere einen Bogen. Vorzugsweise verläuft die die zumindest zwei benachbarten, insbesondere alle, Aufnahmestege 22, 24 in zumindest einem Punkt schneidende Linie in der oder zumindest im Wesentlichen parallel zu der Aufnahmeebene 18 der Transport- und/oder Ablageeinheit 14. Die Transport- und/oder Ablageeinheit 14 weist zumindest die Aufnahmeebene 18 zu einer Aufnahme des Vorformlings oder zu einer Aufnahme von Fasern oder Fasermatten, aus denen der Vorformling erzeugbar ist, auf, die gekrümmt ausgebildet ist. Die Transport- und/oder Ablageeinheit 14 ist vorzugsweise als Transportkorb oder als Transportgitter ausgebildet.

Die Transport- und/oder Ablageeinheit 14 weist zumindest eine, insbesondere an den Aufnahmestegen 22, 24 der Transport- und/oder Ablageeinheit 14 angeordnete, Schnittwerkzeugdurchführungsnut 30, 32 auf, in die sich das Schnittwerkzeug 34 während eines Schnitts durch den auf der Transport- und/oder Ablageeinheit 14 angeordneten Vorformling hineinerstrecken kann. Bevorzugt erstreckt sich die Schnittwerkzeugdurchführungsnut 30, 32 quer, insbesondere zumindest im Wesentlichen senkrecht, zur Längserstreckung der Aufnahmestege 22, 24. Vorteilhafterweise weist die Aufnahmefläche 20 des Werkzeuggrundkörpers 12 zumindest eine Schnittwerkzeugdurchführungsnut 80, 82 auf. Insbesondere ist die Schnittwerkzeugdurchführungsnut 80, 82 des Werkzeuggrundkörpers 12 in einem an dem Werkzeuggrundkörper 12 angeordneten Zustand der Transport- und/oder Ablageeinheit 14 fluchtend zu der Schnittwerkzeugdurchführungsnut 30, 32 der Transport- und/oder Ablageeinheit 14 ausgerichtet (vgl. Figur 3). Vorzugsweise sind mehrere Schnittwerkzeugdurchführungsnuten 30, 32 der Transport- und/oder Ablageeinheit 14 an einem einzelnen Aufnahmesteg 22, 24 der Transport- und/oder Ablageeinheit 14 angeordnet. Bevorzugt sind die mehreren an einem einzelnen Aufnahmesteg 22, 24 der Transport- und/oder Ablageeinheit 14 angeordneten Schnittwerkzeugdurchführungsnuten 30, 32 der Transport- und/oder Ablageeinheit 14 entlang der Längserstreckung des Aufnahmestegs 22, 24 relativ zueinander beabstandet angeordnet. Insbesondere umfasst der Werkzeuggrundkörper 12 mehrere, insbesondere eine mit der Transport- und/oder Ablageeinheit 14 korrespondierende Anzahl an, Schnittwerkzeugdurchführungsnuten 80, 82, die in einem an dem Werkzeuggrundkörper 12 angeordneten Zustand der Transport- und/oder Ablageeinheit 14 fluchtend zu den Schnittwerkzeugdurchführungsnuten 30, 32 der Transport- und/oder Ablageeinheit 14 ausgerichtet sind.

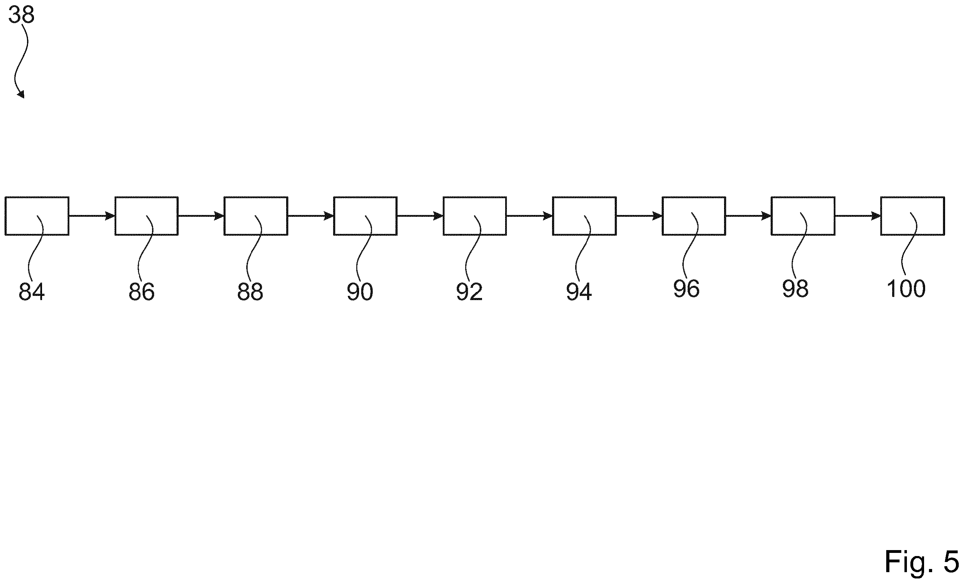

Figur 5 zeigt ein Ablauf eines Verfahrens 38 zumindest zu einer Herstellung eines Vorformlings eines Verbundbauteils, insbesondere unter Verwendung des Vorformwerkzeugs 10, in einer schematischen Darstellung. In zumindest einem Verfahrensschritt 84 des Verfahrens 38 werden Fasern oder Fasermatten zugeschnitten. Insbesondere wird in zumindest einem Verfahrensschritt 84 des Verfahrens 38 die Faserbahn mittels der Zuschnittstation 44 zu Fasermatten geschnitten. In zumindest einem Verfahrensschritt 86 des Verfahrens 38 werden bevorzugt Fasermatten auf der Transport- und/oder Ablageeinheit 14 und/oder dem Werkzeuggrundkörper 12 in mehreren Schichten gestapelt, insbesondere mittels der Handhabungsvorrichtung 54. In zumindest einem Verfahrensschritt 88 des Verfahrens 38 wird vorzugsweise das Vorformwerkzeug 10 und/oder die Transport- und/oder Ablageeinheit 14 der Heizstation 58 zugeführt, insbesondere zur Durchführung einer Thermobehandlung der gestapelten Fasermatten in zumindest einem Verfahrensschritt 90 des Verfahrens 38. In zumindest einem Verfahrensschritt 92 des Verfahrens 38 wird bevorzugt der Vorformling des Verbundbauteils zu einer Thermobehandlung, insbesondere zu einer Abkühlung, von zumindest dem, insbesondere mit der Heizeinheit 40 verbindbaren, Vorformwerkzeug 10 an zumindest das weitere, insbesondere mit der Kühleinheit 42 verbindbaren, Vorformwerkzeug übergeben, insbesondere unter Verwendung der Transport- und/oder Ablageeinheit 14 des Vorformwerkzeugs 10. In zumindest einem Verfahrensschritt 94 des Verfahrens 38 wird vorzugsweise die Transport- und/oder Ablageeinheit 14 der Vorformzuschnittstation 64 zugeführt, insbesondere zur Durchführung einer Thermobehandlung des Verbunds an Fasermatten. In zumindest einem Verfahrensschritt 96 des Verfahrens 38 wird vorzugsweise mit der Schneideinheit 66 der Vorformzuschnittstation 64, der, insbesondere abgekühlte, Verbund an Fasermatten zu Vorformlingen geschnitten. In zumindest einem Verfahrensschritt 98 des Verfahrens 38 werden insbesondere die zugeschnittenen Vorformlinge und/oder die Transport- und/oder Ablageeinheit 14 der Übergabe- und/oder Pufferstation 68 zugeführt. In zumindest einem Verfahrensschritt 100 des Verfahrens 38 werden die Vorformlinge mittels eines RTM-Verfahrens (Resin-Transfer-Moulding-Verfahrens) zu Verbundbauteilen, insbesondere Verbundwerkstoffblattfedern, geformt. Hinsichtlich weiterer Verfahrensschritte des Verfahrens 38 zur Herstellung von Vorformlingen von Verbundbauteilen darf auf die vorhergehende Beschreibung der Produktionsvorrichtung 36 verwiesen werden, da diese Beschreibung analog auch auf das Verfahren 38 zu lesen ist und somit alle Merkmale hinsichtlich der Produktionsvorrichtung 36 auch in Bezug auf das Verfahren 38 als offenbart gelten.

### Bezugszeichen

- 10: Vorformwerkzeug
- 12: Werkzeuggrundkörper
- 14: Transport- und/oder Ablageeinheit
- 16: Aufnahmeausnehmung
- 18: Aufnahmeebene
- 20: Aufnahmefläche
- 22: Aufnahmesteg
- 24: Aufnahmesteg
- 26: Nut
- 28: Nut
- 30: Schnittwerkzeugdurchführungs nut
- 32: Schnittwerkzeugdurchführungs nut
- 34: Schnittwerkzeug
- 36: Produktionsvorrichtung
- 38: Verfahren
- 40: Heizeinheit
- 42: Kühleinheit
- 44: Zuschnittstation
- 46: Coil
- 48: Schneideinheit
- 50: Transporteinheit
- 52: Überwachungseinheit
- 54: Handhabungsvorrichtung
- 56: Greifereinheit
- 58: Heizstation
- 60: Prüf- und/oder Pufferstation
- 62: Überwachungseinheit
- 64: Vorformzuschnittstation
- 66: Schneideinheit
- 68: Übergabe- und/oder Pufferstation
- 70: Transportplatte
- 72: Transporteinheit
- 74: Greiffortsatz
- 76: Greiffortsatz
- 78: Rahmen
- 80: Schnittwerkzeugdurchführungs nut
- 82: Schnittwerkzeugdurchführungs nut
- 84: Verfahrensschritt
- 86: Verfahrensschritt
- 88: Verfahrensschritt
- 90: Verfahrensschritt
- 92: Verfahrensschritt
- 94: Verfahrensschritt
- 96: Verfahrensschritt
- 98: Verfahrensschritt
- 100: Verfahrensschritt

## Patentansprüche

1. Vorformwerkzeug zumindest zu einer Herstellung eines Vorformlings, insbesondere einer Preform, eines Verbundbauteils, insbesondere einer Verbundwerkstoffblattfeder, aus Fasern oder Fasermatten, insbesondere aus Glasfasern oder Glasfasermatten, mit zumindest einem Werkzeuggrundkörper (12) und mit zumindest einer Transport- und/oder Ablageeinheit (14), die zumindest zu einer Aufnahme des Vorformlings oder zu einer Aufnahme der Fasern oder Fasermatten vorgesehen ist, wobei die zumindest eine Transport- und/oder Ablageeinheit (14) zumindest zu einem Transport des Vorformlings oder zu einem Transport der Fasern oder Fasermatten, insbesondere zur Durchführung einer Thermobehandlung des Vorformlings, abnehmbar am Werkzeuggrundkörper (12) angeordnet ist, wobei Z die Transport- und/oder Ablageeinheit (14) Aufnahmestege (22, 24) aufweist, auf denen der Vorformling oder auf denen die Fasern oder die Fasermatten, aus denen der Vorformling erzeugbar ist, anordenbar ist/sind, wobei die Aufnahmestege (22, 24) in einem am Werkzeuggrundkörper (12) angeordneten Zustand der Transport- und/oder Ablageeinheit (14) in, insbesondere eine Aufnahmeausnehmung (16) des Werkzeuggrundkörpers (12) bildende, Nuten (26, 28) des Werkzeuggrundkörpers (12) angeordnet sind.

2. Vorformwerkzeug nach Anspruch 1, **dadurch gekennzeichnet, dass** die Transport- und/oder Ablageeinheit (14) zumindest teilweise korrespondierend mit der Aufnahmeausnehmung (16) des Werkzeuggrundkörpers (12) ausgebildet ist, in der die Transport- und/oder Ablageeinheit (14) zumindest abschnittsweise anordenbar ist.

3. Vorformwerkzeug nach Anspruch 1 oder 2, **dadurch gekennzeichnet, dass** die Transport- und/oder Ablageeinheit (14) zumindest eine Aufnahmeebene (18) zu einer Aufnahme des Vorformlings oder zu einer Aufnahme der Fasern oder der Fasermatten, aus denen der Vorformling erzeugbar ist, aufweist, die in einem am Werkzeuggrundkörper (12) angeordneten Zustand der Transport- und/oder Ablageeinheit (14) zumindest im Wesentlichen bündig mit zumindest einer Aufnahmefläche (20) des Werkzeuggrundkörpers (12) abschließt.

4. Vorformwerkzeug nach einem der vorhergehenden Ansprüche, **dadurch gekennzeichnet, dass** die Transport- und/oder Ablageeinheit (14) Aufnahmestege (22, 24) aufweist, auf denen der Vorformling oder auf denen die Fasern oder die Fasermatten, aus denen der Vorformling erzeugbar ist, anordenbar ist/sind, wobei zumindest zwei benachbarte Aufnahmestege (22, 24) in unterschiedlichen Höhen angeordnet sind.

5. Vorformwerkzeug nach einem der vorhergehenden Ansprüche, **dadurch gekennzeichnet, dass** die Transport- und/oder Ablageeinheit (14) zumindest eine, insbesondere an Aufnahmestegen (22, 24) der Transport- und/oder Ablageeinheit (14) angeordnete, Schnittwerkzeugdurchführungsnut (30, 32) aufweist, in die sich ein Schnittwerkzeug (34) während eines Schnitts durch den auf der Transport- und/oder Ablageeinheit (14) angeordneten Vorformling hineinerstrecken kann.

6. Vorformwerkzeug nach einem der vorhergehenden Ansprüche, **dadurch gekennzeichnet, dass** die Transport- und/oder Ablageeinheit (14) zumindest eine Aufnahmeebene (18) zu einer Aufnahme des Vorformlings oder zu einer Aufnahme von Fasern oder Fasermatten, aus denen der Vorformling erzeugbar ist, aufweist, die gekrümmt ausgebildet ist.

7. Vorformwerkzeug nach einem der vorhergehenden Ansprüche, **dadurch gekennzeichnet, dass** die Transport- und/oder Ablageeinheit (14) als Transportkorb oder als Transportgitter ausgebildet ist.

8. Produktionsvorrichtung zumindest zu einer Herstellung eines Vorformlings, insbesondere einer Preform, eines Verbundbauteils, insbesondere einer Verbundwerkstoffblattfeder, mit zumindest einem Vorformwerkzeug nach einem der vorhergehenden Ansprüche.

9. Verfahren zur Herstellung eines Vorformlings, insbesondere einer Preform, eines Verbundbauteils, insbesondere einer Verbundwerkstoffblattfeder, unter Verwendung eines Vorformwerkzeugs nach einem der Ansprüche 1 bis 7, wobei in zumindest einem Verfahrensschritt der Vorformling des Verbundbauteils zu einer Thermobehandlung, insbesondere zu einer Abkühlung, von zumindest einem, insbesondere mit einer Heizeinheit (40) verbindbaren, Vorformwerkzeug an zumindest ein weiteres, insbesondere mit einer Kühleinheit (42) verbindbaren, Vorformwerkzeug unter Verwendung der Transport- und/oder Ablageeinheit (14) des Vorformwerkzeugs übergeben wird.

## Claims

1. Preforming tool at least for a production of a preform, in particular a premoulding, of a composite component, in particular of a composite-material leaf spring, from fibres or fibre mats, in particular glass fibres or glass fibre mats, with at least one tool base body (12) and with at least one transport and/or deposition unit (14) that is configured at least for receiving the preform or for receiving the fibres or fibre mats,
wherein - at least for a transport of the preform or for a transport of the fibres or fibre mats, in particular for an execution of a thermal treatment of the preform - the at least one transport and/or deposition unit (14) is arranged removably at the tool base body (12),
wherein the transport and/or deposition unit (14) comprises receiving webs (22, 24) on which the preform is arrangeable or on which the fibres or the fibre mats which the preform is producible from are arrangeable,
wherein in a state when the transport and/or deposition unit (14) is arranged on the tool base body (12), the receiving webs (22, 24) are arranged in grooves (26, 28) of the tool base body (12), which in particular form a receiving recess (16) of the tool base body (12).

2. Preforming tool according to claim 1,
**characterised in that** the transport and/or deposition unit (14) is at least partially implemented correspondingly to the receiving recess (16) of the tool base body (12) which the transport and/or deposition unit (14) is arrangeable in at least section-wise.

3. Preforming tool according to claim 1 or 2,
**characterised in that** the transport and/or deposition unit (14) comprises at least one receiving plane (18) for receiving the preform or for receiving the fibres or the fibre mats which the preform is producible from,
wherein in a state when the transport and/or deposition unit (14) is arranged at the tool base body (12), said receiving plane (18) terminates at least substantially flush with at least one receiving surface (20) of the tool base body (12).

4. Preforming tool according to one of the preceding claims,
**characterised in that** the transport and/or deposition unit (14) comprises receiving webs (22, 24) on which the preform is arrangeable or on which the fibres or the fibre mats are arrangeable which the preform is producible from, wherein at least two neighbouring receiving webs (22, 24) are arranged at different levels.

5. Preforming tool according to one of the preceding claims,
**characterised in that** the transport and/or deposition unit (14) comprises at least one cutting tool pass-through groove (30, 32), which is in particular arranged on receiving webs (22, 24) of the transport and/or deposition unit (14), into which a cutting tool (34) may extend during a cutting through the preform that is arranged on the transport and/or deposition unit (14).

6. Preforming tool according to one of the preceding claims,
**characterised in that** the transport and/or deposition unit (14) comprises at least one receiving plane (18) for receiving the preform or for receiving the fibres or fibre mats the preform is producible from, which is embodied in a curved fashion.

7. Preforming tool according to one of the preceding claims,
**characterised in that** the transport and/or deposition unit (14) is embodied as a transport cage or as a transport grid.

8. Production apparatus at least for a production of a preform, in particular a pre-moulding, of a composite component, in particular a composite-material leaf spring, with at least one preforming tool according to one of the preceding claims.

9. Method for producing a preform, in particular a pre-moulding, of a composite component, in particular a composite-material leaf spring, using a preforming tool according to one of claims 1 to 7,
wherein in at least one method step, for a thermal treatment, in particular for a cooling, of at least one preforming tool which is in particular connectable to a heating unit (40), the preform of the composite component is transferred to at least one further preforming tool, which is in particular connectable to a cooling unit (42), using the transport and/or deposition unit (14) of the preforming tool.

## Revendications

1. Outil à préformage au moins pour la fabrication d'une préforme, en particulier un pré-moulé, d'une pièce composite, en particulier d'un ressort à lames en matériau composite, des fibres ou des mats de fibres, en particulier des fibres optiques ou des mats de fibres optiques, avec au moins un corps de base d'outil (12) et avec au moins une unité de transport et/ou de dépôt (14) qui est prévue pour recevoir la préforme et/ou pour recevoir les fibres ou les mats de fibres, où - au moins pour un transport de la préforme ou pour un transport des fibres ou des mats des fibres, en particulier pour l'exécution d'un traitement thermique de la préforme - l'au moins une unité de transport et/ou de dépôt (14) est disposée au corps de base d'outil (12) d'une façon amovible,
où l'unité de transport et/ou de dépôt (14) comporte des traverses à réception (22, 24), sur lesquelles la préforme ou sur lesquelles les fibres ou les mats des fibres desquels la préforme est productible, peut/peuvent être disposée/disposés, où - dans un état de l'unité de transport et/ou de dépôt (14) disposée au corps de base d'outil (12) - les traverses à réception (22, 24) sont disposées dans des rainures (26, 28) du corps de base d'outil (12), qui en particulier forment un évidement recevant (16) du corps de base d'outil (12).

2. Outil à préformage selon la revendication 1,
**caractérisé en ce que** l'unité de transport et/ou de dépôt (14) est réalisée au moins partiellement en correspondance avec l'évidement recevant (16) du corps de base d'outil (12) dans lequel l'unité de transport et/ou de dépôt (14) peut être disposée au moins par sections.

3. Outil à préformage selon la revendication 1 ou 2,
**caractérisé en ce que** l'unité de transport et/ou de dépôt (14) comporte au moins un plan recevant (18) pour recevoir la préforme ou pour recevoir les fibres ou les mats de fibres desquels la préforme est productible,
où ledit plan recevant (18) termine, dans un état de l'unité de transport et/ou de dépôt (14) disposée au corps de base d'outil (12), au moins sensiblement en affleurement avec au moins une surface de réception (20) du corps de base d'outil (12).

4. Outil à préformage selon l'une des revendications précédentes,
**caractérisé en ce que** l'unité de transport et/ou de dépôt (14) comporte des traverses à réception (22, 24), sur lesquelles la préforme ou sur lesquelles les fibres ou les mats de fibres desquels la préforme est productible, peut/peuvent être disposée/disposés,
où au moins deux traverses à réception avoisinantes (22, 24) sont disposées aux niveaux différents.

5. Outil à préformage selon l'une des revendications précédentes,
**caractérisé en ce que** l'unité de transport et/ou de dépôt (14) comporte au moins une rainure de passage d'outil coupeur (30, 32), qui est en particulier disposée aux traverses de réception (22, 24) de l'unité de transport et/ou de dépôt (14),
où un outil coupeur (34) peut s'étendre dans ladite rainure de passage d'outil coupeur (30, 32) pendant un coupage à travers la préforme disposée sur l'unité de transport et/ou de dépôt (14).

6. Outil à préformage selon l'une des revendications précédentes,
**caractérisé en ce que** l'unité de transport et/ou de dépôt (14) comporte au moins un plan recevant (18) pour recevoir la préforme ou pour recevoir des fibres ou des mats de fibres desquels la préforme est productible, ledit plan recevant (18) étant réalisé courbé.

7. Outil à préformage selon l'une des revendications précédentes, **caractérisé en ce que** l'unité de transport et/ou de dépôt (14) est réalisée comme cage de transport ou comme grille de transport.

8. Appareil de production au moins pour une fabrication d'une préforme, en particulier un pré-moulé, d'une pièce composite, en particulier d'un ressort à lames en matériau composite, avec au moins un outil à préformage selon l'une des revendications précédentes.

9. Procédé de la fabrication d'une préforme, en particulier un pré-moulé, d'une pièce composite, en particulier d'un ressort à lames en matériau composite, en utilisant un outil à préformage selon l'une des revendications 1 à 7,
où dans au moins une étape de procédé, pour un traitement thermique, en particulier un refroidissement, de l'au moins un outil à préformage, qui est en particulier raccordable à une unité de chauffage (40), la préforme de la pièce composite est transférée à au moins un autre outil à préformage, qui est en particulier raccordable à une unité de refroidissement (42), en utilisant l'unité de transport et/ou de dépôt (14) de l'outil à préformage.
